# EUROPÄISCHE PATENTANMELDUNG

(11) **EP 2 738 077 A1**
(43) Veröffentlichungstag der Anmeldung: **04.06.2014**
(21) Anmeldenummer: 13190992.1
(22) Anmeldetag: 31.10.2013
(51) Int. Cl.: B62K 21/12

(54) **Lenkervorbau**

(30) Priorität: 28.11.2012 DE 102012221775
(71) Anmelder: ROBERT BOSCH GMBH, 70442 Stuttgart (DE)
(72) Erfinder: Moerbe, Matthias, 74360 Ilsfeld-Helfenberg (DE)

(57) **Zusammenfassung**

Die Erfindung geht aus von einem Lenkervorbau (10), insbesondere zur mechanischen Koppelung eines Lenkers mit einer Steuerungsstange eines lenkbaren Fahrzeugs.

Erfindungsgemäß ist am Lenkervorbau (10) eine druckmittelsteuernde Komponente einer druckmittelbetätigbaren Einrichtung des Fahrzeugs angeordnet. Bei dieser Einrichtung handelt es sich vorzugsweise um eine hydraulische Radbremse, die insbesondere mit einer Blockierverhinderung ausgestattet ist. Letztere weist z.B. Fluidsteuerelemente in Form von Ventilen auf, die mechanisch, hydraulisch und/oder elektronisch betätigbar sind und deshalb dazu geeignet sind, einem Blockieren eines gebremsten Rades des Fahrzeugs entgegen zu wirken.

## Beschreibung

### Stand der Technik

Die Erfindung geht aus von einem Lenkervorbau, insbesondere für ein mittels eines Lenkers steuerbaren Fahrzeugs nach den Merkmalen des Oberbegriffs des Anspruchs 1.

Ein derartiger Lenkervorbau wird insbesondere bei Fahrrädern verwendet und ist beispielsweise bekannt aus der Druckschrift DE 60 2004 000 268 T2. An diesem bekannten Lenkervorbau ist in einer dafür vorgesehenen Aufnahme ein Geschwindigkeitsanzeiger aufgenommen. Bei letzterem handelt es sich um ein elektronisches Element, welches eine von einem Sensor erfasste Information zur Drehzahl eines Rades des Fahrrads erfasst, aus dieser Drehzahlinformation die Momentangeschwindigkeit des Fahrrads errechnet und diese über ein Display dem Fahrradfahrer anzeigt.

### Vorteile der Erfindung

Gegenüber diesem aufgezeigten Stand der Technik unterscheidet sich die Erfindung durch die kennzeichnenden Merkmale des Anspruchs 1.

Am vorgeschlagenen Lenkervorbau ist erfindungsgemäß wenigstens eine Komponente einer druckmittelbetätigbaren Einrichtung des Fahrzeugs angeordnet.

Vorzugsweise handelt es sich bei dieser druckmittelbetätigbaren Einrichtung um eine Bremsanlage des Fahrzeugs, die wenigstens eine hydraulisch betätigbare Radbremse umfasst. Besonders bevorzugt können derartige Bremsanlagen mit einer Blockierverhinderung ausgestattet sein, welche einem Blockieren wenigstens eines der gebremsten Räder entgegen wirkt.

Unter einem mittels eines Lenkers steuerbaren Fahrzeugs wird auch im Folgenden insbesondere ein Fahrrad in ein- oder mehrspuriger Bauart und mit wenigstens zwei Laufrädern, von denen wenigstens eines bremsbar ist, verstanden. Im Fahrradbau setzen sich hydraulische Bremsanlagen vermehrt am Markt durch. Diese ermöglichen höhere Bremsleistungen als mechanische Bremssysteme und sind im Vergleich zu diesen herkömmlichen Seilzugbremsen besser geeignet, um die Bremskraft bzw. den vom Fahrradfahrer vorgegebenen Bremsdruck zu regulieren. Mittels einer Bremsdruckregulierung kann das Blockieren eines oder mehrerer gebremster Laufräder des Fahrrads verhindert und damit drohenden Unfällen oder Stürzen entgegen gewirkt werden. Allerdings weisen hydraulische Bremsanlagen, insbesondere wenn diese mit einer solchen Blockierverhinderung ausgestattet sind, Komponenten auf wie beispielsweise Fluidsteuerelemente oder Ventile, für die bislang kein geeigneter Bauraum am Fahrrad zur Verfügung steht.

Ein Lenkervorbau ist zur Anordnung derartiger Komponenten einer druckmittelbetätigbaren Einrichtung aus den nachfolgenden Gründen besonders geeignet:
Beim Lenkervorbau eines Fahrrads handelt es sich um ein weitgehend genormtes Bauteil, das sich ohne großen mechanischen Aufwand oder Fachwissen montieren und weitgehend unabhängig vom Fahrradhersteller einsetzen lässt. Die am Lenkervorbau vorhandenen Befestigungseinrichtungen und damit die mechanischen Schnittstellen zum Lenker oder zur Steuerstange einer Gabel des Fahrrads können unverändert beibehalten werden. In anderen Worten lässt sich ein erfindungsgemäß ausgebildeter Lenkervorbau vorteilhafter Weise leicht gegen einen herkömmlichen Lenkervorbau austauschen, ohne Konstruktionsänderungen an anderen Fahrradteilen notwendig zu machen. Die mittels der erfindungsgemäß am Lenkervorbau angeordneten Komponenten einer druckmittelbetätigbaren Einrichtung des Fahrzeugs erreichbare Funktionalität lässt sich somit auch nachrüsten.

Weitere Vorteile oder Vorteilhafte Weiterbildungen der Erfindung ergeben sich aus den Unteransprüchen oder der nachfolgenden Beschreibung.

Durch eine Anordnung der wenigstens einen Komponente in einem Komponentengehäuse, das einteilig mit dem Lenkervorbau ausgebildet ist, ist diese Komponente gut gegen Nässe und äußere Beschädigungen geschützt.

Wird als Komponente ein betätigbares Fluidsteuerelement, vorzugsweise ein Ventil eingesetzt, dann lässt sich z.B. ein hydraulisches Bremssystem mit Blockierverhinderung auch im Fahrradbau darstellen.

### Zeichnung

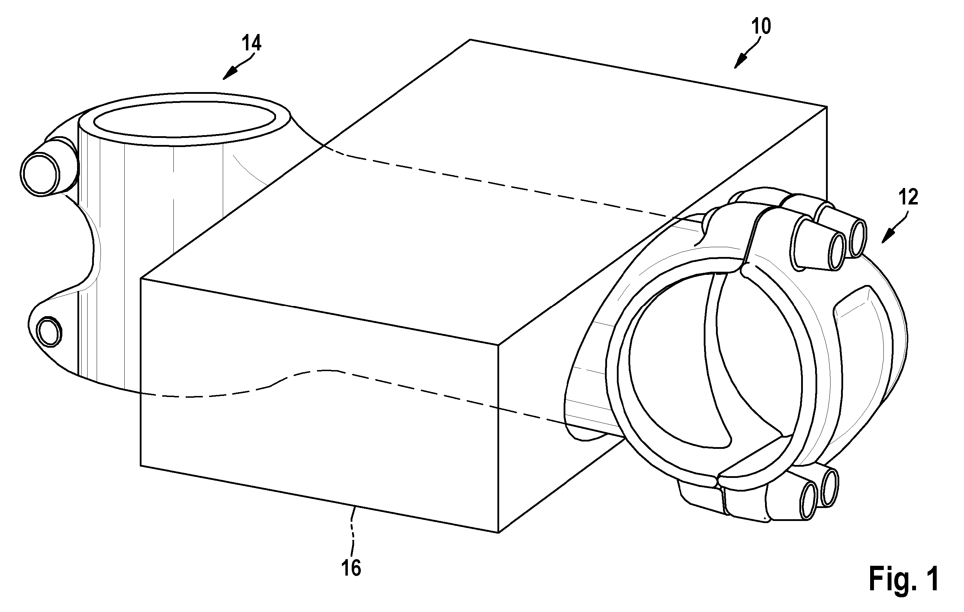

Ein Ausführungsbeispiel der Erfindung ist in der Zeichnung dargestellt und in der nachfolgenden Beschreibung detailliert erläutert. Die einzige Figur zeigt die Erfindung in perspektivischer Ansicht.

### Beschreibung des Ausführungsbeispiels

Die Figur zeigt einen erfindungsgemäßen Lenkervorbau 10. Dieser weist an einem Ende eine erste Befestigungsvorrichtung 12 auf, in der ein Lenker (nicht dargestellt) drehfest und axial unverschieblich verankerbar ist. Die Befestigungsvorrichtung 12 setzt sich dazu aus zwei halbschalenförmigen Bügelelementen zusammen, die exemplarisch mit Hilfe von auf gegenüberliegenden Seiten angeordneten, tangential ausgerichteten Fixierelementen, insbesondere Schrauben, lösbar miteinander verbunden sind. Die beiden halbschalenförmigen Bügelelemente umschließen gemeinsam eine kreisförmige Öffnung, deren Durchmesser geringfügig kleiner ist, als der Durchmesser eines in dieser Öffnung aufzunehmenden Lenkers (nicht gezeigt). Zur Befestigung des Lenkers werden die Fixierelemente zunächst gelöst, so dass die beiden Bügelelemente voneinander getrennt und der Lenker zwischen die Bügelelemente eingelegt werden kann. Anschließend werden die Bügelelemente mit Hilfe der Fixierelemente wieder miteinander verbunden und dadurch der Lenker zwischen ihnen eingespannt.

Gegenüberliegend zur ersten Befestigungsvorrichtung 12 befindet sich eine zweite Befestigungseinrichtung 14 im Wesentlichen identischer Bauart, jedoch in 90° gedrehter Anordnung. Diese zweite Befestigungsvorrichtung 14 ist vorgesehen zur Verbindung des Lenkervorbaus 10 mit einer drehbaren Steuerstange, die zum Beispiel mit einer Gabel eines lenkbaren Rades (nicht gezeichnet) eines Fahrrads verbunden ist.

Zwischen den beiden Befestigungsvorrichtungen 12 und 14 befindet sich ein beispielhaft quaderförmig ausgeführtes Komponentengehäuse 16. Dieses Komponentengehäuse 16 und die beiden Befestigungsvorrichtungen 12, 14 sind miteinander in einem Stück ausgebildet, das heißt sie bilden miteinander einen einteilig ausgeführten Lenkervorbau 10. Form und Abmessungen des Komponentengehäuses 16 sind durch den benötigten Bauraum zur erfindungsgemäßen Anordnung von druckmittelsteuernden Komponenten einer druckmittelbetätigbaren Einrichtung bestimmt und können darüber hinaus noch nach gestalterischen und ergonomischen Gesichtspunkten anwendungsspezifisch gewählt werden. Zur Aufnahme wenigstens einer druckmittelsteuernden Komponente, z.B. einem Fluidsteuerelement in Form eines Ventils zur Regulierung des Bremsdrucks an wenigstens einem der gebremsten Räder, ist das Komponentengehäuse 16 mit geeignet gestalteten Öffnungen oder Bohrungen (nicht gezeigt) versehen, in welche das Fluidsteuerelement druckmitteldicht einbaubar und befestigbar ist. Darüber hinaus können Anschlüsse (ebenfalls nicht dargestellt) am Komponentengehäuse 16 vorhanden sein z.B. für Leitungen, über welche die Versorgung des Fluidsteuerelements mit Druckmittel erfolgt und/oder über welche das Komponentengehäuse 16 mit einem druckmittelbetätigten Verbraucher, insbesondere einer hydraulischen Radbremse koppelbar ist. Auch Betätigungseinrichtungen, wie z.B. Bremshebel, mit denen der Fahrer einen gewünschten Bremsdruck vorgeben kann, lassen sich über Leitungen mittelbar oder unmittelbar an das Komponentengehäuse 16 anschließen. Davon abgesehen können am Komponentengehäuse 16 zusätzlich Einbauräume für eine Spannungsversorgung, für eine elektronische Schaltungseinrichtung, z.B. zur Ansteuerung der Fluidsteuerelemente, für eine Signalauswertung, für Anzeigeeinrichtungen und/oder für Beleuchtungseinrichtungen des Fahrzeugs vorgesehen sein.

Ein derartiger gestalteter Lenkervorbau 10 lässt sich problemlos gegen einen vorhandenen Lenkervorbau, der z.B. keine Komponente einer druckmittelbetätigbaren Einrichtung aufweist, austauschen. Dies kann beispielsweise erfolgen, wenn ein vorhandener Vorbau reparaturbedürftig ist bzw. wenn ein vorhandenes Fahrrad nachträglich mit einer druckmittelbetätigten Einrichtung, wie z.B. einer hydraulischen Bremsanlage, ausgestattet werden soll.

Ein bereits mit einer hydraulischen Bremsanlage ausgestattetes Fahrrad lässt sich nachträglich mit einer Blockierverhinderung ausstatten, welche dem Blockieren eines gebremsten Rades entgegen wirkt und damit Unfälle, Stürze oder Verletzungen des Fahrradfahrers bestmöglich verhindert. Die für eine Blockierverhinderung erforderlichen Fluidsteuerelemente wie Ventile, Steuerelektronik und/oder Spannungsversorgung lassen sich an einem erfindungsgemäßen Lenkervorbau gut geschützt gegen Nässe und äußere Beschädigung anordnen.

## Patentansprüche

1. Lenkervorbau (10), insbesondere zur mechanischen Koppelung eines Lenkers mit einer Steuerstange eines lenkbaren Fahrzeugs, mit einer ersten Befestigungsvorrichtung (12) für den Lenker und mit wenigstens einer zweiten Befestigungsvorrichtung (14) für die Steuerungsstange,
**dadurch gekennzeichnet,**
**dass** am Lenkervorbau (10) wenigstens eine druckmittelsteuernde Komponente einer druckmittelbetätigbaren Einrichtung des Fahrzeugs angeordnet ist.

2. Lenkervorbau nach Anspruch 1, **dadurch gekennzeichnet,**
**dass** die wenigstens eine druckmittelsteuernde Komponente in ein Komponentengehäuse (16) eingebaut ist, das einteilig mit dem Lenkervorbau (10) ausgebildet ist.

3. Lenkervorbau nach Anspruch 1 oder 2, **dadurch gekennzeichnet, dass** die wenigstens eine druckmittelsteuernde Komponente hydraulisch, mechanisch und/oder elektronisch betätigbar ist.

4. Lenkervorbau nach einem der Ansprüche 1 bis 3, **dadurch gekennzeichnet, dass** die druckmittelbetätigbare Einrichtung des Fahrzeugs ein Bremssystem mit wenigstens einer Radbremse ist.

5. Lenkervorbau nach Anspruch 4, **dadurch gekennzeichnet, dass** das Bremssystem ein hydraulisches Bremssystem, insbesondere mit Blockierverhinderung ist und dass die druckmittelsteuernde Komponente Bestandteil dieser Blockierverhinderung ist.

6. Lenkervorbau nach einem der Ansprüche 1 bis 5, **dadurch gekennzeichnet, dass** das Fahrzeug ein fremd- und/oder muskelkraftbetriebenes Fahrrad mit wenigstens zwei Laufrädern ist.
